# EUROPÄISCHE PATENTSCHRIFT

(11) **EP 2 198 176 B1**
(45) Veröffentlichungstag und Bekanntmachung des Hinweises auf die Patenterteilung: **15.02.2012**
(21) Anmeldenummer: 08801606.8
(22) Anmeldetag: 18.08.2008
(51) Int. Cl.: F16D 13/64

(54) **SEGMENTIERTES TRÄGERBLECH FÜR EINE LAMELLE UND LAMELLE MIT EINEM SOLCHEN SEGMENTIERTEN TRÄGERBLECH**
SEGMENTED SUPPORT PLATE FOR A LAMELLA, AND LAMELLA HAVING A SEGMENTED SUPPORT PLATE OF SAID TYPE
TÔLE SUPPORT SEGMENTÉE POUR DISQUE, ET DISQUE POURVU D'UNE TELLE TÔLE SUPPORT SEGMENTÉE

(30) Priorität: 14.09.2007 DE 102007043999; 12.11.2007 DE 102007053758
(43) Veröffentlichungstag der Anmeldung: 23.06.2010
(73) Patentinhaber: BorgWarner Inc., Auburn Hills, MI 48326 (US)
(72) Erfinder: NEUBAUER, Dirk, 69502 Hemsbach (DE); WAGNER, Michael, 68782 Brühl (DE); MERKEL, Harald, Otto, 74918 Angelbachtal (DE)
(74) Vertreter: Leckel, Ulf
(86) Internationale Anmeldenummer: PCT/EP2008/006769
(87) Internationale Veröffentlichungsnummer: WO 2009/036853

(56) Entgegenhaltungen:
- EP-A- 1 650 454
- WO-A-2007/097784
- GB-A- 1 347 240
- US-A- 5 332 075

## Beschreibung

Die vorliegende Erfindung betrifft ein segmentiertes Trägerblech für eine Lamelle, wie beispielsweise eine Reiblamelle in einer Lamellenkupplung, das aus mindestens zwei Segmenten unter Ausbildung einer Grenzlinie zwischen den Segmenten puzzleartig zusammengesetzt ist, wobei das eine Segment einen Vorsprung aufweist, der in eine Ausnehmung in dem anderen Segment unter Ausbildung eines Grenzlinienabschnitts zwischen dem Vorsprung und der Ausnehmung eingesetzt ist, und der Vorsprung und die Ausnehmung derart geformt sind, dass sich die benachbarten Segmente bezogen auf die Umfangsrichtung des Trägerblechs in mindestens einem ersten und einem zweiten Teilabschnitt des Grenzlinienabschnitts hintergreifen. Die vorliegende Erfindung betrifft ferner eine Lamelle mit einem solchen segmentierten Trägerblech.

So beschreibt die US 4,674,616 ein segmentiertes Trägerblech für eine Lamelle, das ringscheibenförmig ausgebildet ist. Das ringscheibenförmige Trägerblech setzt sich aus insgesamt vier Segmenten zusammen, die an ihren Endseiten unter Ausbildung einer Grenzlinie zwischen den einzelnen benachbarten Segmenten puzzleartig zusammengesetzt sind. Während jeweils ein Segment des Trägerblechs einen endseitigen Vorsprung aufweist, weist das benachbarte Segment eine entsprechende Ausnehmung auf, in den der Vorsprung des anderen Segments eingesetzt ist. Der zwischen dem Vorsprung und der Ausnehmung ausgebildete Abschnitt der Grenzlinie wird hier wie auch nachstehend als Grenzlinienabschnitt bezeichnet. Der Vorsprung und die Ausnehmung sind derart geformt, dass sich die benachbarten Segmente bezogen auf die Umfangsrichtung des Trägerblechs in einem Teilabschnitt des Grenzlinienabschnitts hintergreifen. Diese Ausbildung von Vorsprung und Ausnehmung bewirkt, dass die zusammengesetzten Segmente des Trägerblechs nicht in Umfangsrichtung auseinander gezogen werden können. Dennoch besteht bei den bekannten Trägerblechen der Nachteil, dass dies bei besonders hohen Drehzahlen aufgrund der dadurch entstehenden Zentrifugalkräfte bersten können, zumal die Geometrie des Vorsprungs sowie der Ausnehmung keinen sicheren Zusammenhalt bei besonders hohen Zentrifugalkräften gewährleisten kann.

Um dieses Problem zu lösen, schlägt die EP 1 650 454 A1 einen anderen Aufbau des segmentierten Trägerblechs vor. Das bekannte Trägerblech ist ebenfalls ringscheibenförmig ausgebildet und setzt sich in einer ersten Lage aus drei Segmenten zusammen, die unter Ausbildung einer Grenzlinie zwischen den benachbarten Segmenten puzzleartig zusammengesetzt sind. Auch hier weist das eine Segment einen Vorsprung auf, der in eine entsprechende Ausnehmung in dem benachbarten Segment eingesetzt ist. Im Gegensatz zu dem zuvor beschriebenen segmentierten Trägerblech sind der Vorsprung und die Ausnehmung jedoch derart geformt, dass sich die benachbarten Segmente bezogen auf die Umfangsrichtung des Trägerblechs in einem ersten und einem zweiten Teilabschnitt des Grenzlinienabschnitts hintergreifen, wobei der Grenzlinienabschnitt auch hier denjenigen Abschnitt der Grenzlinie beschreibt, der zwischen dem Vorsprung und der Ausnehmung ausgebildet ist. Dank der beiden Teilabschnitte des Grenzlinienabschnitts ist eine sicherere Abstützung des einen Segments innerhalb der Ausnehmung des anderen Segments möglich. Dennoch kann das bekannte segmentierte Trägerblech im Bereich der Verbindungsstellen zwischen den Segmenten bersten, wenn besonders hohe Drehzahlen und somit besonders hohe Zentrifugalkräfte auf das Trägerblech wirken. Um diesem Problem zu begegnen, schlägt die EP 1 650 454 A1 des Weiteren vor, eine weiteres segmentiertes Trägerblech der zuvor beschriebenen Art in axialer Richtung als eine zweite Lage seitlich an dem ersten segmentierten Trägerblech zu befestigen, wobei die Segmente der beiden Trägerbleche zueinander versetzt angeordnet sind.

Das zuvor beschriebene bekannte segmentierte Trägerblech hat sich in der Praxis bewährt, ist jedoch mit dem Nachteil behaftet, dass es lediglich unter-größerem Aufwand hergestellt werden kann, zumal zwei Trägerbleche axial zusammengefügt werden müssen, um die Stabilität der Gesamtkonstruktion bei hohen Drehzahlen zu gewährleisten. Darüber hinaus sind die aus den bekannten segmentierten Trägerblechen zusammengesetzten Reiblamellen je nach Dicke des einzelnen Trägerblechs dicker ausgebildet, so dass diese in Summe einen relativ großen axialen Bauraum benötigen.

Ausgehend von dem vorgenannten Stand der Technik besteht die Aufgabe der vorliegenden Erfindung darin, ein segmentiertes Trägerblech für eine Lamelle zu schaffen, das einfach hergestellt werden kann, eine geringe axiale Baulänge aufweist und selbst bei hohen Drehzahlen und somit hohen Zentrifugalkräften eingesetzt werden kann, ohne dass sich die Segmente des segmentierten Trägerblechs voneinander lösen, was zu einem Bersten des Trägerblechs führen würde. Der vorliegenden Erfindung liegt ferner die Aufgabe zugrunde, eine Lamelle, insbesondere eine Reiblamelle für eine Lamellenkupplung, zu schaffen, die ein solches vorteilhaftes segmentiertes Trägerblech aufweist.

Diese Aufgabe wird durch die in den Patentansprüchen 1 bzw. 14 angegebenen Merkmale gelöst. Vorteilhafte Ausführungsformen der Erfindung sind Gegenstand der Unteransprüche.

Das erfindungsgemäße segmentierte Trägerblech ist für eine Lamelle, insbesondere eine Reiblamelle in einer Lamellenkupplung konzipiert. Das Trägerblech ist aus mindestens zwei Segmenten unter Ausbildung einer Grenzlinie zwischen den Segmenten puzzleartig zusammengesetzt. So weist das eine Segment einen Vorsprung auf, der in eine Ausnehmung in dem anderen Segment unter Ausbildung eines Grenzlinienabschnitts zwischen dem Vorsprung und der Ausnehmung eingesetzt ist. Unter dem Grenzlinienabschnitt ist hierbei derjenige Abschnitt der Grenzlinie zu verstehen, der zwischen dem Rand des Vorsprungs und dem Rand der Ausnehmung ausgebildet ist. Der Vorsprung und die zugehörige Ausnehmung sind dabei derart geformt, dass sich die benachbarten Segmente bezogen auf die Umfangsrichtung des Trägerblechs in mindestens einem ersten und einem zweiten Teilabschnitt des Grenzlinienabschnitts hintergreifen, d. h. der jeweilige Teilabschnitt des Grenzlinienabschnitts ist derjenige Abschnitt des Grenzlinienabschnitts, in dem sich der Rand des Vorsprungs und der Rand der Ausnehmung hintergreifen. Man könnte vorzugsweise auch davon sprechen, dass der jeweilige Teilabschnitt des Grenzlinienabschnitts derjenige Abschnitt des Grenzlinienabschnitts ist, in dem sich die einander zugeordneten, zugewandten oder aneinander angrenzenden Randabschnitte der Ränder des Vorsprungs und der Ausnehmung hintergreifen. Erfindungsgemäß überschneiden sich die Projektion des ersten Teilabschnitts in Umfangsrichtung auf eine Radiale und die Projektion des zweiten Teilabschnitts in Umfangsrichtung auf diese Radiale zumindest teilweise. Die Projektion erfolgt dabei jeweils in Umfangsrichtung, d. h. die Projektionsrichtung ist wie auch die Umfangsrichtung des Trägerblechs gekrümmt.

Indem sich die Projektionen des ersten und zweiten Teilabschnitts in Umfangsrichtung auf eine Radiale zumindest teilweise überschneiden, kann ein besonders großer Abstützbereich in Umfangsrichtung zwischen den beiden benachbarten Segmenten erreicht werden, so dass eine Bersten des Trägerblechs im Bereich der Verbindungsstellen zwischen den Segmenten selbst bei hohen Drehzahlen und den damit verbundenen hohen Zentrifugalkräften sicher verhindert werden kann. Selbst bei einem ringscheibenförmigen Trägerblech mit einer relativ geringen Breite in radialer Richtung kann ein besonders großer Abstützbereich zwischen den benachbarten Segmenten realisiert werden. Dank des großen Abstützbereichs ist kein weiteres Trägerblech, das in axialer Richtung seitlich an dem ersten Trägerblech befestigt werden müsste, wie dies in der EP 1 650 454 A1 beschrieben ist, erforderlich. Somit ist durch die Erfindung ein segmentiertes Trägerblech geschaffen, das einfach hergestellt werden kann, eine geringe axiale Baulänge aufweist und bei besonders hohen Drehzahlen eingesetzt werden kann, ohne das es aufgrund der Zentrifugalkräfte zu einem Bersten des erfindungsgemäßen Trägerblechs im Bereich der Verbindungsstellen zwischen den Segmenten kommt.

In einer bevorzugten Ausführungsform des erfindungsgemäßen segmentierten Trägerblechs überschneidet sich die Projektion des ersten Teilabschnitts in Umfangsrichtung auf die Radiale mit der Projektion des zweiten Teilabschnitts in Umfangsrichtung auf diese Radiale vollständig. So ist es beispielsweise möglich, dass sich die eine Projektion vollständig innerhalb der anderen Projektion befindet.

In einer besonders bevorzugten Ausführungsform des erfindungsgemäßen segmentierten Trägerblechs ist die Projektion des ersten Teilabschnitts in Umfangsrichtung auf die Radiale deckungsgleich mit der Projektion des zweiten Teilabschnitts in Umfangsrichtung auf die Radiale. Bei dieser Ausführungsform haben die Teilabschnitte bezogen auf deren Projektion somit jeweils ihre maximale Größe angenommen, so dass ein besonders sicherer Zusammenhalt der benachbarten Segmente in Umfangsrichtung realisiert ist.

In einer vorteilhaften Ausführungsform des erfindungsgemäßen segmentierten Trägerblechs hintergreifen sich die benachbarten Segmente bezogen auf die Umfangsrichtung des Trägerblechs in mindestens einem weiteren, dritten Teilabschnitt des Grenzlinienabschnitts. Dank des weiteren, dritten Teilabschnitts des Grenzlinienabschnitts ist der Zusammenhalt der benachbarten Segmente in Umfangsrichtung weiter verbessert, wobei sich die Projektion des dritten Teilabschnitts in Umfangsrichtung auf die Radiale ebenfalls teilweise oder gänzlich mit den Projektionen des ersten und zweiten Teilabschnitts in Umfangsrichtung auf die Radiale überschneiden kann. Letzteres ist beispielsweise dann von Vorteil, wenn das ringscheibenförmige segmentierte Trägerblech lediglich eine geringe Breite in radialer Richtung aufweist.

In einer weiteren vorteilhaften Ausführungsform des erfindungsgemäßen segmentierten Trägerblechs sind die Teilabschnitte voneinander beabstandet. Dies bedeutet, dass sich weitere Abschnitte des Grenzlinienabschnitts zwischen den genannten Teilabschnitten erstrecken, wobei sich die Segmente in diesen Zwischenabschnitten bezogen auf die Umfangsrichtung nicht hintergreifen.

In einer besonders vorteilhaften Ausführungsform des erfindungsgemäßen segmentierten Trägerblechs weist jedes Segment einen Vorsprung und eine Ausnehmung auf, die jeweils einer Ausnehmung und einen Vorsprung in demselben benachbarten Segment zugeordnet sind. Auf diese Weise fungiert der Endabschnitt eines jedes Segment sowohl als Schlüssel als auch als Schloss, so dass ein besonders sicherer Zusammenhalt im Bereich der Verbindungsstellen zwischen den Segmenten geschaffen werden kann.

In einer weiteren bevorzugten Ausführungsform des erfindungsgemäßen segmentierten Trägerblechs sind die beiden Grenzlinienabschnitte derselben Grenzlinie im Wesentlichen symmetrisch bezüglich eines Symmetriepunktes ausgebildet. So ist der erste Grenzlinienabschnitt zwischen dem Vorsprung des einen Segments und der Ausnehmung des anderen Segments ausgebildet, während der zweite Grenzlinienabschnitt zwischen der Ausnehmung des einen Segments und dem Vorsprung des anderen Segments ausgebildet ist. Der Terminus "im Wesentlichen" macht hierbei deutlich, dass die beiden Grenzlinienabschnitte im zusammengebauten Zustand des Trägerblechs tatsächlich punktsymmetrisch ausgebildet sein können. Es ist jedoch ebenso möglich, dass die Vorsprünge und die Ausnehmungen die Krümmung des Trägerblechs in Umfangsrichtung teilweise oder gänzlich nachvollziehen, so dass eine leichte Abweichung von einer tatsächlichen Punktsymmetrie gegeben sein kann.

In einer weiteren vorteilhaften Ausführungsform des erfindungsgemäßen segmentierten Trägerblechs ist der Symmetriepunkt auf der Grenzlinie angeordnet.

In einer weiteren vorteilhaften Ausführungsform des erfindungsgemäßen segmentierten Trägerblechs grenzen die beiden Grenzlinienabschnitte aneinander an.

In einer weiteren besonders vorteilhaften Ausführungsform des erfindungsgemäßen segmentierten Trägerblechs grenzen die beiden Grenzlinienabschnitte in dem Symmetriepunkt aneinander an.

In einer weiteren besonders bevorzugten Ausführungsform des erfindungsgemäßen segmentierten Trägerblechs ist der Vorsprung derjenige endseitige Vorsprung eines Segmentes, der in Umfangsrichtung hinter einer Radialen durch den Symmetriepunkt angeordnet ist, und die Ausnehmung diejenige endseitige Ausnehmung eines Segmentes, die in derselben Umfangsrichtung vor der Radialen durch den Symmetriepunkt angeordnet ist.

Um die Herstellung der einzelnen Segmente wie auch die spätere Zusammensetzung des segmentierten Trägerblechs aus den einzelnen Segmenten weiter zu vereinfachen, weisen alle Segmente des Trägerblechs dieselbe Form auf. Unter der Form ist insbesondere die Kontur der Segmente zu verstehen, wobei eine etwaige Innen- oder Außenverzahnung vorzugsweise ebenfalls mit eingeschlossen ist.

Um einen besonders sicheren Zusammenhalt der Segmente des segmentierten Trägerblechs zu erzielen, hintergreifen sich die benachbarten Segmente in einer weiteren bevorzugten Ausführungsform des erfindungsgemäßen segmentierten Trägerblechs bezogen auf die Umfangsrichtung des Trägerblechs in mindestens vier voneinander beabstandeten Teilabschnitten der gesamten Grenzlinie.

Um den Zusammenhalt der Segmente des erfindungsgemäßen Trägerblechs in Umfangsrichtung weiter zu verbessern, weist der Vorsprung in einer weiteren besonders bevorzugten Ausführungsform des erfindungsgemäßen segmentierten Trägerblechs einen ersten und einen zweiten Vorsprungsabschnitt auf, die sich jeweils in einen ersten bzw. zweiten Ausnehmungsabschnitt der zugehörigen Ausnehmung unter Ausbildung des ersten und zweiten Teilabschnitts des Grenzlinienabschnitts erstrecken, wobei sich die Vorsprungsabschnitte und die Ausnehmungsabschnitte entweder radial nach innen oder radial nach außen erstrecken. So könnte der Vorsprung beispielsweise in der Art eines Kamms ausgebildet sein, dessen Zinken in radialer Richtung in die Ausnehmungsabschnitte der ebenfalls kammförmig ausgebildeten Ausnehmung eingreifen. Hierdurch wird ein besonders sicherer Zusammenhalt der Segmente selbst bei besonders hohen Drehzahlen des Trägerblechs erreicht.

In einer weiteren vorteilhaften Ausführungsform des erfindungsgemäßen segmentierten Trägerblechs ist das segmentierte Trägerblech ringscheibenförmig ausgebildet und weist einen Innenrand und einen Außenrand auf. So können am Innen- oder Außenrand beispielsweise Verzahnungen vorgesehen sein, um das segmentierte Trägerblech mit einem Außenlamellenträger oder einem Innenlamellenträger einer Lamellenkupplung drehfest verbinden zu können.

Um zu verhindern, dass sich die Ausnehmung bei besonders hohen Drehzahlen und somit starken Zentrifugalkräften aufweitet, so dass der Vorsprung in Umfangsrichtung aus der Ausnehmung gleiten kann, ist in einer weiteren besonders bevorzugten Ausführungsform des erfindungsgemäßen segmentierten Trägerblechs ferner ein Stützvorsprung am Außenrand oder/und Innenrand des einen Segments vorgesehen, der sich in Umfangsrichtung erstreckt und an dem das benachbarte Segment in radialer Richtung abgestützt ist.

Gemäß einer weiteren besonders bevorzugten Ausführungsform des erfindungsgemäßen segmentierten Trägerblechs ist in dem benachbarten Segment eine Aussparung am Innenrand oder/und Außenrand vorgesehen, in den sich der zuvor erwähnte Stützvorsprung des einen Segmentes erstreckt. Auf diese Weise kann ein kreisförmiger Innen- bzw. Außenrand ohne radial hervorstehende Stützvorsprünge geschaffen werden.

Die erfindungsgemäße Lamelle, bei der es sich beispielsweise um eine Reiblamelle für eine Reibkupplung handeln kann, weist ein erfindungsgemäßes segmentiertes Trägerblech der zuvor beschriebenen Art auf. Dies umfasst auch eine Lamelle, wie beispielsweise eine Stahllamelle, die ausschließlich aus dem segmentierten Trägerblech besteht.

In einer bevorzugten Ausführungsform der erfindungsgemäßen Lamelle ist ein Reibbelag auf mindestens einer Seite, vorzugsweise auf beiden Seiten der Lamelle angeordnet. Im erstgenannten Fall würde es sich dann um eine so genannte Single-Side-Lamelle handeln. Bei dem Reibbelag kann es sich beispielsweise um einen Papierreibbelag handeln. Darüber hinaus könnte der Reibbelag ebenfalls segmentiert sein, wobei die Verbindungsstellen zwischen den Segmenten des Reibbelages vorzugsweise versetzt zu den Verbindungsstellen zwischen den Segmenten des Trägerblechs angeordnet sind.

Die Erfindung wird im Folgenden anhand einer beispielhaften Ausführungsform unter Bezugnahme auf die beigefügten Zeichnungen näher erläutert. Es zeigen:
- Fig. 1: eine Draufsicht auf eine Ausführungsform des erfindungsgemäßen segmen- tierten Trägerblechs und
- Fig. 2: eine vergrößerte Darstellung des Ausschnitts A von Fig. 1.

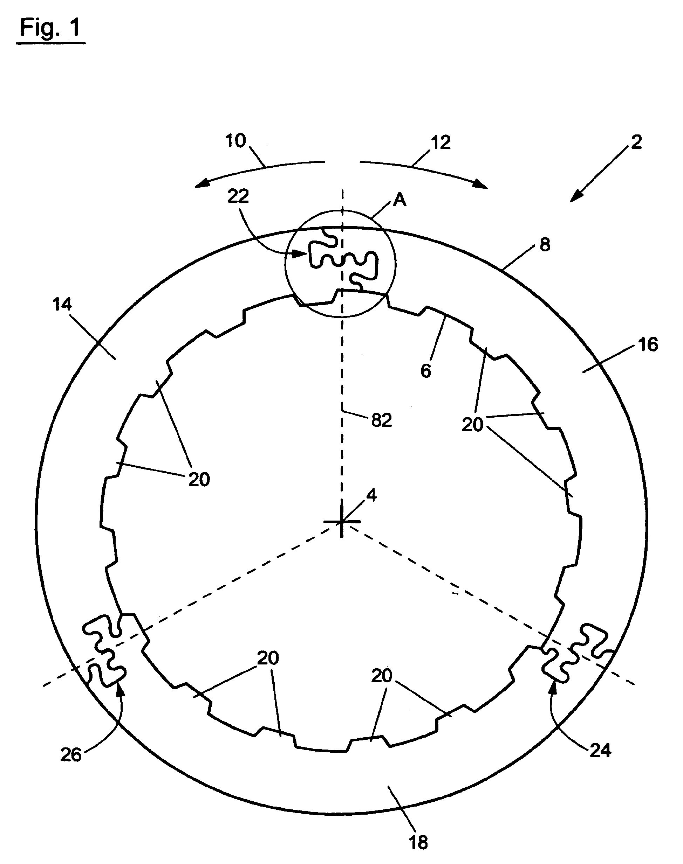

Fig. 1 zeigt eine Ausführungsform des erfindungsgemäßen segmentierten Trägerblechs 2 für eine Lamelle. Bei der Lamelle kann es sich beispielsweise um eine Lamelle für eine Kupplungseinrichtung, eine Bremseinrichtung, usw. handeln. So kann zu diesem Zweck beispielsweise ein Reibbelag (nicht dargestellt) auf mindestens einer Seite des segmentierten Trägerblechs 2 befestigt werden, um eine Reiblamelle für eine der vorstehend genannten Einrichtungen zu erhalten. Auch könnte die Lamelle allein von dem Trägerblech 2 gebildet sein und eine Stahllamelle ausbilden. Das segmentierte Trägerblech 2 ist ringscheibenförmig ausgebildet und kann innerhalb einer der vorstehend genannten Einrichtungen um eine Drehachse 4 rotiert werden, die sich in Fig. 1 in Richtung der Normalen des Zeichnungsblattes erstreckt. Dabei weist das segmentierte Trägerblech 2 einen der Drehachse 4 zugewandten Innenrand 6 und einen radial nach außen weisenden Außenrand 8 auf. Die beiden Umfangsrichtungen 10, 12 sind in Fig. 1 anhand von Pfeilen dargestellt.

Das segmentierte Trägerblech 2 setzt sich in der in Fig. 1 dargestellten Ausführungsform aus drei Segmenten 14, 16 und 18 zusammen. Die Segmente 14, 16, 18 weisen dabei alle dieselbe Form bzw. Kontur auf, wobei an den der Drehachse 4 zugewandten Seitenrändern der Segmente 14, 16, 18, die den Innenrand 6 des Trägerblechs 2 ausbilden, eine Vielzahl von radial nach innen weisenden Zähnen 20 vorgesehen sind, die beispielsweise eine spätere drehfeste Verzahnung mit einem Außenlamellenträger einer Kupplungseinrichtung oder ähnliches ermöglichen. Das dargestellte Trägerblech 2 ist somit als ein Trägerblech für eine Außenlamelle ausgebildet, wobei die Zähne 20 jedoch ebenso am Außenrand 8 des Trägerblechs 2 vorgesehen sein könnten, so dass das Trägerblech 2 ein Trägerblech für eine Innenlamelle darstellen könnte.

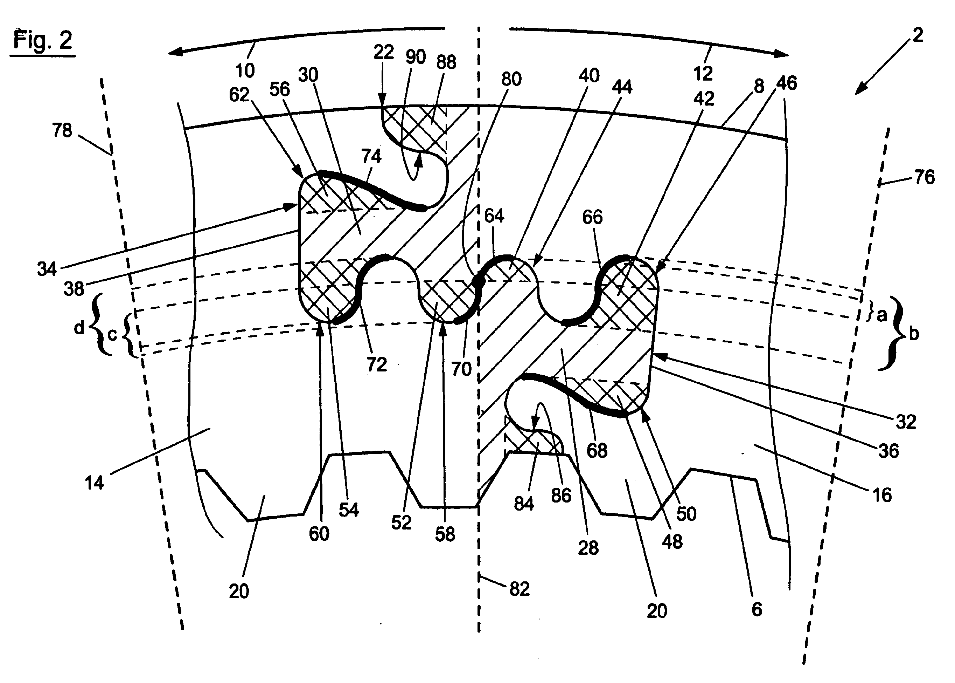

Die Segmente 14, 16, 18 sind an ihren in Umfangsrichtung 10 bzw. 12 weisenden Endabschnitten puzzleartig zusammengefügt, so dass jeweils eine Grenzlinie 22, 24, 26 zwischen den einander benachbarten Segmenten 14, 16; 16, 18; 18, 14 ausgebildet sind. Die voneinander getrennten Grenzlinien 22, 24, 26 erstrecken sich jeweils von dem Innenrand 6 radial nach außen zu dem Außenrand 8 des segmentierten Trägerblechs 2. Nachstehend wird der genauere Aufbau und Verlauf der Grenzlinie 22 stellvertretend für alle Grenzlinien 22, 24, 26 zwischen den Segmenten 16, 18, 20 unter Bezugnahme auf Fig. 2 eingehender erläutert.

An ihren einander zugewandten Endabschnitten weisen die Segmente 14, 16 jeweils einen Vorsprung 28, 30 auf. Die beiden Vorsprünge 28, 30 sind in Fig. 2 jeweils mit einer einfachen Schraffur versehen, um die Anschaulichkeit zu erhöhen. Der Vorsprung 28 des Segments 14 ist in eine Ausnehmung 32 in dem Endabschnitt des Segmentes 16 eingesetzt, wobei die Ausnehmung 32 dieselbe Form wie der Vorsprung 28 hat. Andererseits ist der Vorsprung 30 des Segments 16 in eine Ausnehmung 34 in dem Endabschnitt des Segments 14 eingesetzt, wobei auch die Ausnehmung 34 dieselbe Form wie der Vorsprung 30 des Segmentes 16 aufweist. Auf diese Weise sind die Segmente 14, 16 an ihren Endabschnitten puzzleartig miteinander verbunden. Zwischen dem Rand des Vorsprungs 28 und dem Rand der Ausnehmung 32 ist ein erster Abschnitt der Grenzlinie 22 ausgebildet, der nachstehend als erster Grenzlinienabschnitt 36 bezeichnet wird. Entsprechend ist zwischen dem Rand des Vorsprungs 30 und dem Rand der Ausnehmung 34 ein zweiter Abschnitt der Grenzlinie 22 ausgebildet, der nachstehend als zweiter Grenzlinienabschnitt 38 bezeichnet wird.

Der Vorsprung 28 weist einen ersten Vorsprungsabschnitt 40 und einen zweiten Vorsprungsabschnitt 42 auf, die in Fig. 2 jeweils eine Kreuzschraffur aufweisen. Die beiden Vorsprungsabschnitte 40, 42 erstrecken sich ausgehend von dem Vorsprung 28 radial nach außen in Richtung des Außenrandes 8. Dabei erstrecken sich die beiden Vorsprungsabschnitte 40, 42 jeweils in einen entsprechenden Ausnehmungsabschnitt 44 bzw. 46 der Ausnehmung 32. Darüber hinaus ist an dem Vorsprung 28 ferner ein dritter Vorsprungsabschnitt 48 vorgesehen, der ebenfalls mit einer Kreuzschraffur angedeutet ist. Der dritte Vorsprungsabschnitt 48 erstreckt sich radial nach innen in Richtung des Innenrandes 6 des Trägerblechs 2 und liegt in einem dritten Ausnehmungsabschnitt 50 der Ausnehmung 32 ein.

Entsprechend weist der Vorsprung 30 des Segmentes 16 kreuzschraffiert angedeutete Vorsprungsabschnitte auf, wobei sich der erste Vorsprungsabschnitt 52 und der zweite Vorsprungsabschnitt 54 radial nach innen in Richtung des Innenrandes 6 des Trägerblechs 2 erstrecken, wohingegen sich der dritte Vorsprungsabschnitt 56 radial nach außen in Richtung des Außenrandes 8 des Trägerblechs 2 erstreckt. Die genannten Vorsprungsabschnitte 52, 54, 56 erstrecken sich dabei wiederum jeweils in entsprechende Ausnehmungsabschnitte 58, 60, 62 der Ausnehmung 34 in dem Segment 14.

Der erste Vorsprungsabschnitt 40 des Vorsprungs 28 und der erste Ausnehmungsabschnitt 44 der Ausnehmung 32 sind derart geformt, dass sich die benachbarten Segmente 14, 16 bezogen auf die Umfangsrichtung 10 bzw. 12 des Trägerblechs 2 in einem ersten Teilabschnitt 64 des Grenzlinienabschnitts 36 hintergreifen. Entsprechend sind der zweite Vorsprungsabschnitt 42 des Vorsprungs 28 und der zweite Ausnehmungsabschnitt 46 der Ausnehmung 32 derart geformt, dass sich die benachbarten Segmente 14, 16 bezogen auf die Umfangsrichtung 10 bzw. 12 des Trägerblechs 2 in einem zweiten Teilabschnitt 66 des Grenzlinienabschnitts 36 hintergreifen. Darüber hinaus sind der dritte Vorsprungsabschnitt 48 des Vorsprungs 28 und der dritte Ausnehmungsabschnitt 50 der Ausnehmung 32 derart geformt, dass sich die benachbarten Segmente 14, 16 bezogen auf die Umfangsrichtung 10 bzw. 12 des Trägerblechs 2 ferner in einem dritten Teilabschnitt 68 des Grenzlinienabschnitts 36 hintergreifen.

Der Vorsprung 30 des Segments 16 sowie die zugehörige Ausnehmung 34 des Segments 14 sind im Wesentlichen auf dieselbe Weise geformt, so dass auch innerhalb des zweiten Grenzlinienabschnitts 38 ein erster Teilabschnitt 70, ein zweiter Teilabschnitt 72 und ein dritter Teilabschnitt 74 ausgebildet sind, in denen sich die benachbarten Segmente 14, 16 bezogen auf die Umfangsrichtung 10, 12 des Trägerblechs 2 hintergreifen. Die Teilabschnitte 64, 66, 68, 70, 72, 74 sind in Fig. 2 dicker als die verbleibenden Abschnitte der Grenzlinienabschnitte 36 und 38 dargestellt, um eine bessere Unterscheidung und Abgrenzung zu ermöglichen. Ferner sind die Teilabschnitte 64, 66, 68 entlang des ersten Grenzlinienabschnitts 36 voneinander beabstandet, während die Teilabschnitte 70, 72, 74 entlang des zweiten Grenzlinienabschnitts 38 voneinander beabstandet sind.

Projiziert man den ersten Teilabschnitt 64 in Umfangsrichtung 12 auf eine erste Radiale 76 des Trägerblechs 2, so erhält man eine Projektion a in Form einer Projektionslinie. Projiziert man ferner den zweiten Teilabschnitt 66 in Umfangsrichtung 12 auf die erste Radiale 76, so erhält man eine Projektion b in Form einer Projektionslinie. Der erste und zweite Teilabschnitt 64, 66 des ersten Grenzlinienabschnitts 36 sind dabei derart angeordnet, dass sich die Projektion a des ersten Teilabschnitts 64 vollständig mit der Projektion b des zweiten Teilabschnitts 66 überschneidet.

Projiziert man den ersten Teilabschnitt 70 in Umfangsrichtung 10 auf eine zweite Radiale 78, so erhält man eine Projektion c in Form einer Projektionslinie. Projiziert man ferner den zweiten Teilabschnitt 72 in Umfangsrichtung 10 auf die zweite Radiale 78, so erhält man eine Projektion d in Form einer weiteren Projektionslinie. Dabei überschneidet die Projektion c des ersten Teilabschnitts 70 die Projektion d des zweiten Teilabschnitts 72 zumindest zum Teil.

Zur Erzeugung der Projektionen a bis d ist die Projektionsrichtung entsprechend den Umfangsrichtungen 12 bzw. 10 gekrümmt. In einer alternativen Ausführungsform könnten die Projektionen a und b bzw. c und d auf den Radialen 76 bzw. 78 deckungsgleich ausgebildet sein. Die besondere Anordnung des ersten Teilabschnitts 64 bzw. 70 gegenüber dem zweiten Teilabschnitt 66 bzw. 72 bewirkt einen besonders starken Zusammenhalt der beiden Segmente 14, 16 in Umfangsrichtung 10, 12 zueinander, so dass sich das Trägerblech 2 besonders gut für eine Reiblamelle eignet, die mit hohen Drehzahlen rotiert. Ein Bersten des Trägerblechs 2 im Bereich der Verbindungsstelle zwischen den Segmenten 14, 16 wird sicher unterbunden, wobei die geschachtelten ersten und zweiten Teilabschnitte 64 bzw. 70 und 66 bzw. 72 besonders vorteilhaft dann einsetzbar sind, wenn die Breite des Trägerblechs 2 zwischen dem Innenrand 6 und dem Außenrand 8 besonders gering ist.

Die beiden Grenzlinienabschnitte 36, 38 derselben Grenzlinie 22 sind im Wesentlichen symmetrisch bezüglich eines Symmetriepunktes ausgebildet. Der Terminus "im Wesentlichen" macht hierbei deutlich, dass die beiden Grenzlinienabschnitte 36, 38 im zusammengebauten Zustand des Trägerblechs 2 tatsächlich punktsymmetrisch ausgebildet sein können. Es ist jedoch ebenso möglich, dass die Vorsprünge 28, 30 und die Ausnehmungen 32, 34 die Krümmung des Trägerblechs 2 in Umfangsrichtung teilweise oder gänzlich nachvollziehen, so dass eine leichte Abweichung von einer tatsächlichen Punktsymmetrie gegeben sein kann, wie dies in Fig. 2 gezeigt ist. Der entsprechende Symmetriepunkt ist in Fig. 2 mit dem Bezugszeichen 80 versehen und auf der Grenzlinie 22 angeordnet.

Die beiden Grenzlinienabschnitte 36, 38 grenzen aneinander an, wobei der Symmetriepunkt 80 zwischen den beiden Grenzlinienabschnitten 36, 38 angeordnet ist. Die beiden ersten Teilabschnitte 64 bzw. 70 sind zusammenhängend ausgebildet, wobei zwischen diesen beiden Teilabschnitten 64, 70 der Symmetriepunkt 80 gelegen ist. Insgesamt sind somit fünf voneinander beabstandete Teilabschnitte 64 und 70, 66, 68, 72, 74 entlang der gesamten Grenzlinie 22 vorgesehen, in denen sich die benachbarten Segmente 14, 16 bezogen auf die Umfangsrichtung 10, 12 des Trägerblechs 2 hintergreifen.

Bei der vorangehenden Beschreibung wird unter dem Vorsprung 28 bzw. 30 derjenige endseitige Vorsprung des Segmentes 14 bzw. 16 verstanden, der in Umfangsrichtung 10 bzw. 12 hinter einer Radialen 82 durch den Symmetriepunkt 80 angeordnet ist, während unter der Ausnehmung 34 bzw. 32 diejenige endseitige Ausnehmung des Segments 14 bzw. 16 zu verstehen ist, die in derselben Umfangsrichtung 12 bzw. 10 vor der Radialen 82 durch den Symmetriepunkt 80 angeordnet ist.

Um eine Aufweitung der Ausnehmung 32 in dem Segment 16 und somit ein Herausgleiten des Vorsprungs 28 aus der Ausnehmung 32 in Umfangsrichtung 10 zu verhindern, weist der Vorsprung 28 ferner einen Stützvorsprung 84 auf, der in Fig. 2 mit einer Kreuzschraffur versehen ist. Der Stützvorsprung 84 ist am Innenrand 6 des Trägerblechs 2 vorgesehen und erstreckt sich in Umfangsrichtung 12. Auf diese Weise ist das Segment 16 radial nach innen an dem Stützvorsprung 84 abgestützt, wobei in dem Segment 16 im Bereich des Innenrandes 6 des Trägerblechs 2 eine Aussparung 86 vorgesehen ist, in die sich der Stützvorsprung 84 in Umfangsrichtung 12 erstrecken kann. Um denselben Effekt auch für die Ausnehmung 34 zu erzielen, weist der Vorsprung 30 des Segmentes 16 ferner einen Stützvorsprung 88 auf, der sich in Umfangsrichtung 10 in eine entsprechende Aussparung 90 in dem Segment 14 erstreckt. Der Stützvorsprung 88 ist entlang des Außenrandes 8 des Trägerblechs 2 angeordnet. Sowohl die Aussparung 86 als auch die Aussparung 90 können als Teil der Ausnehmung 32 bzw. der Ausnehmung 34 ausgebildet sein.

### Bezugszeichenliste

- 2: segmentiertes Trägerblech
- 4: Drehachse
- 6: Innenrand
- 8: Außenrand
- 10: Umfangsrichtung
- 12: entgegengesetzte Umfangsrichtung
- 14: Segment
- 16: Segment
- 18: Segment
- 20: Zähne
- 22: Grenzlinie
- 24: Grenzlinie
- 26: Grenzlinie
- 28: Vorsprung
- 30: Vorsprung
- 32: Ausnehmung
- 34: Ausnehmung
- 36: erster Grenzlinienabschnitt
- 38: zweiter Grenzlinienabschnitt
- 40: erster Vorsprungsabschnitt
- 42: zweiter Vorsprungsabschnitt
- 44: erster Ausnehmungsabschnitt
- 46: zweiter Ausnehmungsabschnitt
- 48: dritter Vorsprungsabschnitt
- 50: dritter Ausnehmungsabschnitt
- 52: erster Vorsprungsabschnitt
- 54: zweiter Vorsprungsabschnitt
- 56: dritter Vorsprungsabschnitt
- 58: erster Ausnehmungsabschnitt
- 60: zweiter Ausnehmungsabschnitt
- 62: dritter Ausnehmungsabschnitt
- 64: erster Teilabschnitt
- 66: zweiter Teilabschnitt
- 68: dritter Teilabschnitt
- 70: erster Teilabschnitt
- 72: zweiter Teilabschnitt
- 74: dritter Teilabschnitt
- 76: erste Radiale
- 78: zweite Radiale
- 80: Symmetriepunkt
- 82: Radiale durch den Symmetriepunkt
- 84: Stützvorsprung
- 86: Aussparung
- 88: Stützvorsprung
- 90: Aussparung

- a: Projektion
- b: Projektion
- c: Projektion
- d: Projektion

## Patentansprüche

1. Segmentiertes Trägerblech (2) für eine Lamelle, das aus mindestens zwei Segmenten (14, 16) unter Ausbildung einer Grenzlinie (22) zwischen den Segmenten (14, 16) puzzleartig zusammengesetzt ist, wobei das eine Segment (14) einen Vorsprung (28) aufweist, der in eine Ausnehmung (32) in dem anderen Segment (16) unter Ausbildung eines Grenzlinienabschnitts (36) zwischen dem Vorsprung (28) und der Ausnehmung (32) eingesetzt ist, und der Vorsprung (28) und die Ausnehmung (32) derart geformt sind, dass sich die benachbarten Segmente (14, 16) bezogen auf die Umfangsrichtung (10, 12) des Trägerblechs (2) in mindestens einem ersten und einem zweiten Teilabschnitt (64, 66) des Grenzlinienabschnitts (36) hintergreifen, **dadurch gekennzeichnet, dass** sich die Projektion (a) des ersten Teilabschnitts (64) in Umfangsrichtung (12) auf eine Radiale (76) mit der Projektion (b) des zweiten Teilabschnitts (66) in Umfangsrichtung (12) auf die Radiale (76) zumindest teilweise überschneidet.

2. Segmentiertes Trägerblech (2) nach Anspruch 1, **dadurch gekennzeichnet, dass** sich die Projektion (a) des ersten Teilabschnitts (64) in Umfangsrichtung (12) auf die Radiale (76) mit der Projektion (b) des zweiten Teilabschnitts (66) in Umfangsrichtung (12) auf die Radiale (76) vollständig überschneidet, wobei die Projektion (a) des ersten Teilabschnitts (64) in Umfangsrichtung (12) auf die Radiale (76) vorzugsweise deckungsgleich mit der Projektion (b) des zweiten Teilabschnitts (66) in Umfangsrichtung (12) auf die Radiale (76) ist.

3. Segmentiertes Trägerblech (2) nach einem der vorangehenden Ansprüche, **dadurch gekennzeichnet, dass** sich die benachbarten Segmente (14, 16) bezogen auf die Umfangsrichtung (10, 12) des Trägerblechs (2) in mindestens einem weiteren, dritten Teilabschnitt (68) des Grenzlinienabschnitts (36) hintergreifen.

4. Segmentiertes Trägerblech (2) nach einem der vorangehenden Ansprüche, **dadurch gekennzeichnet, dass** die Teilabschnitte (64, 66, 68) voneinander beabstandet sind.

5. Segmentiertes Trägerblech (2) nach einem der vorangehenden Ansprüche, **dadurch gekennzeichnet, dass** jedes Segment (14, 16) einen Vorsprung (28, 30) und eine Ausnehmung (34, 32) aufweist, die jeweils einer Ausnehmung (32, 34) und einem Vorsprung (30, 28) in demselben benachbarten Segment (16, 14) zugeordnet sind.

6. Segmentiertes Trägerblech (2) einem der vorangehenden Ansprüche, **dadurch gekennzeichnet, dass** die beiden Grenzlinienabschnitte (36, 38) derselben Grenzlinie (22) im Wesentlichen symmetrisch bezüglich eines Symmetriepunktes (80) ausgebildet sind, wobei der Symmetriepunkt (80) vorzugsweise auf der Grenzlinie (22) angeordnet ist oder/und die beiden Grenzlinienabschnitte (36, 38) vorzugsweise aneinander angrenzen, besonders bevorzugt in dem Symmetriepunkt (80) aneinander angrenzen.

7. Segmentiertes Trägerblech (2) nach Anspruch 6, **dadurch gekennzeichnet, dass** der Vorsprung (28, 30) derjenige endseitige Vorsprung eines Segmentes (14, 16) ist, der in Umfangsrichtung (12, 10) hinter einer Radialen (82) durch den Symmetriepunkt (80) angeordnet ist, und die Ausnehmung (34, 32) diejenige endseitige Ausnehmung eines Segmentes (14, 16) ist, die in derselben Umfangsrichtung (12, 10) vor der Radialen (82) durch den Symmetriepunkt (80) angeordnet ist.

8. Segmentiertes Trägerblech (2) nach einem der vorangehenden Ansprüche, **dadurch gekennzeichnet, dass** alle Segmente (14, 16, 18) des Trägerblechs (2) dieselbe Form aufweisen.

9. Segmentiertes Trägerblech (2) nach einem der vorangehenden Ansprüche, **dadurch gekennzeichnet, dass** sich die benachbarten Segmente (14, 16) bezogen auf die Umfangsrichtung (10, 12) des Trägerblechs (2) in mindestens vier voneinander beabstandeten Teilabschnitten (64, 70; 66; 68; 72; 74) der gesamten Grenzlinie (22) hintergreifen.

10. Segmentiertes Trägerblech (2) nach einem der vorangehenden Ansprüche, **dadurch gekenntzeichnet, dass** der Vorsprung (28, 30) einen ersten und einen zweiten Vorsprungsabschnitt (40, 42; 52, 54) aufweist, die sich in einen ersten und zweiten Ausnehmungsabschnitt (44, 46; 58, 60) der zugehörigen Ausnehmung (32; 34) unter Ausbildung des ersten und zweiten Teilabschnitts (64, 66; 70, 72) des Grenzlinienabschnitts (36; 38) erstrecken, wobei sich die Vorsprungsabschnitte (40, 42; 52, 54) und die Ausnehmungsabschnitte (44, 46; 58, 60) entweder radial nach innen oder radial nach außen erstrecken.

11. Segmentiertes Trägerblech (2) nach einem der vorangehenden Ansprüche, **dadurch gekennzeichnet, dass** das segmentierte Trägerblech (2) ringscheibenförmig ausgebildet ist und einen Innen- und Außenrand (6, 8) aufweist.

12. Segmentiertes Trägerblech (2) nach Anspruch 11, **dadurch gekennzeichnet, dass** ferner ein Stützvorsprung (84; 88) am Innenrand (6) oder/und Außenrand (8) des einen Segmentes (14; 16) vorgesehen ist, der sich in Umfangsrichtung (12; 10) erstreckt und an dem das benachbarte Segment (16; 14) in radialer Richtung abgestützt ist.

13. Segmentiertes Trägerblech (2) nach Anspruch 12, **dadurch gekennzeichnet, dass** in dem benachbarten Segment (16; 14) eine Aussparung (86; 90) am Innenrand (6) oder/und Außenrand (8) vorgesehen ist, in den sich der Stützvorsprung (84; 88) des einen Segmentes (14; 16) erstreckt.

14. Lamelle, insbesondere Reiblamelle, mit einem segmentierten Trägerblech (2) nach einem der vorangehenden Ansprüche.

15. Lamelle nach Anspruch 14, **dadurch gekennzeichnet, dass** ein Reibbelag auf mindestens einer Seite, vorzugsweise auf beiden Seiten der Lamelle angeordnet ist.

## Claims

1. Segmented support plate (2) for a lamella, which support plate is assembled from at least two segments (14, 16) in the manner of a jigsaw puzzle so as to form a boundary line (22) between the segments (14, 16), one segment (14) having a protrusion (28), which is inserted into a recess (32) in the other segment (16) so as to form a boundary line section (36) between the protrusion (28) and the recess (32), and the protrusion (28) and the recess (32) being shaped in such a way that the adjacent segmentes(14, 16) engage behind one another, in relation to the circumferential direction (10, 12) of the support plate (2), in at least one first and one second partial section (64, 66) of the boundary line section (36), **characterized in that** the projection (a) of the first partial section (64) onto a radial line (76) in a circumferential direction (12) at least partially overlaps with the projection (b) of the second partial section (66) onto the radial line (76) in a circumferential direction (12).

2. Segmented support plate (2) according to Claim 1, **characterized in that** the projection (a) of the first partial section (64) onto the radial line (76) in a circumferential direction (12) overlaps completely with the projection (b) of the second partial section (66) onto the radial line (76) in a circumferential direction (12) the projection (a) of the first partial section (64) onto the radial line (76) in a circumferential direction (12) preferably being congruent with the projection (b) of the second partial section (66) onto the radial line (76) in a circumferential direction (12).

3. Segmented support plate (2) according to one of the preceding claims, **characterized in that** the adjacent segments (14, 16) engage behind one another, in relation to the circumferential direction (10, 12) of the support plate (2), in at least one further, third partial section (68) of the boundary line section (36).

4. Segmented support plate (2) according to one of the preceding claims, **characterized in that** the partial sections (64, 66, 68) are spaced apart.

5. Segmented support plate (2) according to one of the preceding claims, **characterized in that** each segment (14, 16) has a protrusion (28, 30) and a recess (34, 32), which are each associated with a respective recess (32, 34) and a respective protrusion (30, 28) in the same adjacent segment (16, 14).

6. Segmented support plate (2) according to one of the preceding claims, **characterized in that** the two boundary line sections (36, 38) of the same boundary line (22) are of substantially symmetrical design with respect to a point of symmetry (80), the point of symmetry (80) preferably being arranged on the boundary line (22), and/or the two boundary line sections (36, 38) preferably adjoining one another, particularly preferably adjoining one another at the point of symmetry (80).

7. Segmented support plate (2) according to Claim 6, **characterized in that** the protrusion (28, 30) is that end protrusion of a segment (14, 16) which, in a circumferential direction (12, 10), is arranged behind a radial line (82) through the point of symmetry (80), and the recess (34, 32) is that end recess of a segment (14, 16) which, in the same circumferential direction (12, 10), is arranged in front of the radial line (82) through the point of symmetry (80).

8. Segmented support plate (2) according to one of the preceding claims, **characterized in that** all the segments (14, 16, 18) of the support plate (2) have the same shape.

9. Segmented support plate (2) according to one of the preceding claims, **characterized in that** the adjacent segments (14, 16) engage behind one another, in relation to the circumferential direction (10, 12) of the support plate (2), in at least four mutually spaced partial sections (64, 70; 66; 68; 72; 74) of the boundary line (22) as a whole.

10. Segmented support plate (2) according to one of the preceding claims, **characterized in that** the protrusion (28, 30) has a first and a second protrusion section (40, 42; 52, 54), which extend into a first and a second recess section (44, 46; 58, 60) of the associated recess (32; 34) so as to form the first and the second partial section (64, 66; 70, 72) of the boundary line section (36; 38), the protrusion sections (40, 42; 52, 54) and the recess sections (44, 46; 58, 60) extending either radially inward or radially outward.

11. Segmented support plate (2) according to one of the preceding claims, **characterized in that** the segmented support plate (2) is designed as an annular disk and has an inner and an outer edge (6, 8).

12. Segmented support plate (2) according to Claim 11, **characterized in that** a supporting protrusion (84; 88) is furthermore provided on the inner edge (6) and/or the outer edge (8) of one segment (14; 16), which protrusion extends in a circumferential direction (12; 10) and on which protrusion the adjacent segment (16; 14) is supported in a radial direction.

13. Segmented support plate (2) according to Claim 12, **characterized in that** a pocket (86; 90) is provided on the inner edge (6) and/or the outer edge (8) of the adjacent segment (16; 14), into which pocket the supporting protrusion (84; 88) of said one segment (14; 16) extends.

14. Lamella, in particular a friction lamella, having a segmented support plate (2) according to one of the preceding claims.

15. Lamella according to Claim 14, **characterized in that** a friction facing is arranged on at least one side, preferably on both sides, of the lamella.

## Revendications

1. Tôle de support segmentée (2) pour un disque, qui est constituée, à la manière d'un puzzle, d'au moins deux segments (14, 16) constituant une ligne de séparation (22) entre les segments (14, 16), l'un des segments (14) présentant une saillie (28) qui est insérée dans un évidement (32) dans l'autre segment (16) en formant une portion de ligne de séparation (36) entre la saillie (28) et l'évidement (32), et la saillie (28) et l'évidement (32) étant formée de telle suite que les segments adjacents (14, 16), par rapport à la direction périphérique (10, 12) de la tôle de support (2), viennent en prise par l'arrière dans au moins une première et une deuxième portion partielle (64, 66) de la portion de ligne de séparation (36), **caractérisée en ce que** la projection (a) de la première portion partielle (64) dans la direction périphérique (12) sur une radiale (76) intersecte au moins en partie la projection (b) de la deuxième portion partielle (66) dans la direction périphérique (12) sur la radiale (76).

2. Tôle de support segmentée (2) selon la revendication 1, **caractérisée en ce que** la projection (a) de la première portion partielle (64) dans la direction périphérique (12) sur la radiale (76) intersecte complètement la projection (b) de la deuxième portion partielle (66) dans la direction périphérique (12) sur la radiale (76), la projection (a) de la première portion partielle (64) dans la direction périphérique (12) sur la radiale (76) étant de préférence en coïncidence avec la projection (b) de la deuxième portion partielle (66) dans la direction périphérique (12) sur la radiale (76).

3. Tôle de support segmentée (2) selon l'une quelconque des revendications précédentes, **caractérisée en ce que** les segments adjacents (14, 16) par rapport à la direction périphérique (10, 12) de la tôle de support (2) viennent en prise par l'arrière dans au moins une autre troisième portion partielle (68) de la portion de ligne de séparation (36).

4. Tôle de support segmentée (2) selon l'une quelconque des revendications précédentes, **caractérisée en ce que** les portions partielles (64, 66, 68) sont espacées les unes des autres.

5. Tôle de support segmentée (2) selon l'une quelconque des revendications précédentes, **caractérisée en ce que** chaque segment (14, 16) présente une saillie (28, 30) et un évidement (34, 32), qui sont à chaque fois associés à un évidement (32, 34) et une saillie (30, 28) dans le même segment adjacent (16, 14).

6. Tôle de support segmentée (2) selon l'une quelconque des revendications précédentes, **caractérisée en ce que** les deux portions de ligne de séparation (36, 38) de la même ligne de séparation (22) sont réalisées de manière essentiellement symétrique par rapport à un point de symétrie (80), le point de symétrie (80) étant disposé de préférence sur la ligne de séparation (22) et/ou les deux portions de ligne de séparation (36, 38) étant de préférence adjacentes l'une à l'autre, particulièrement préférablement étant adjacentes l'une à l'autre au point de symétrie (80).

7. Tôle de support segmentée (2) selon la revendication 6, **caractérisée en ce que** la saillie (28, 30) est la saillie d'un côté d'un segment (14, 16), qui est disposée dans la direction périphérique (12, 10) derrière une radiale (82) passant par le point de symétrie (80), et l'évidement (34, 32) est l'évidement d'un côté d'un segment (14, 16) qui est disposé dans la même direction périphérique (12, 10) avant la radiale (82) passant par le point de symétrie (80).

8. Tôle de support segmentée (2) selon l'une quelconque des revendications précédentes, **caractérisée en ce que** tous les segments (14, 16, 18) de la tôle de support (2) présentent la même forme.

9. Tôle de support segmentée (2) selon l'une quelconque des revendications précédentes, **caractérisée en ce que** les segments adjacents (14, 16) viennent en prise par rapport à la direction périphérique (10, 12) de la tôle de support (2) dans au moins quatre portions partielles espacées les unes des autres (64, 70 ; 66 ; 68 ; 72 ; 74) de la totalité de la ligne de séparation (22).

10. Tôle de support segmentée (2) selon l'une quelconque des revendications précédentes, **caractérisée en ce que** la saillie (28, 30) présente une première et une deuxième portion de saillie (40, 42 ; 52, 54) qui s'étendent dans une première et une deuxième portion d'évidement (44, 46 ; 58, 60) de l'évidement associé (32 ; 34) en créant la première et la deuxième portion partielle (64, 66 ; 70, 72) de la portion de ligne de séparation (36 ; 38), les portions de saillie (40, 42 ; 52, 54) et les portions d'évidement (44, 46 ; 58, 60) s'étendant soit radialement vers l'intérieur soit radialement vers l'extérieur.

11. Tôle de support segmentée (2) selon l'une quelconque des revendications précédentes, **caractérisée en ce que** la tôle de support segmentée (2) est réalisée en forme de disque annulaire et présente un bord intérieur et un bord extérieur (6, 8).

12. Tôle de support segmentée (2) selon la revendication 11, **caractérisée en ce que** de plus une saillie de support (84 ; 88) est prévue sur le bord intérieur (6) et/ou sur le bord extérieur (8) d'un segment (14 ; 16), laquelle s'étend dans la direction périphérique (12 ; 10) et sur laquelle est supporté le segment adjacent (16 ; 14) dans la direction radiale.

13. Tôle de support segmentée (2) selon la revendication 12, **caractérisée en ce que** dans le segment adjacent (16 ; 14) est prévu un creux (86 ; 90) dans lequel s'étend la saillie de support (84 ; 88) du premier segment (14 ; 16).

14. Disque, en particulier disque de friction, comprenant une tôle de support segmentée (2) selon l'une quelconque des revendications précédentes.

15. Disque selon l'une quelconque des revendications 14, **caractérisé en ce qu**'une garniture de friction est disposée sur au moins un côté, de préférence sur les deux côtés du disque.
